Europäisches Patentamt

European Patent Office

Office européen des brevets

(19)

(11) Publication number: **0 212 132**
A1

# EUROPEAN PATENT APPLICATION

(12)

(21) Application number: 86108503.3

(22) Date of filing: 21.06.86

(51) Int. Cl.⁴: **G 06 F 11/14**

(30) Priority: 28.06.85 US 750627

(43) Date of publication of application: 04.03.87
Bulletin 87/10

(84) Designated Contracting States: CH DE FR GB IT LI NL SE

(71) Applicant: Hewlett-Packard Company, P.O. Box 10301,
Palo Alto California 94303-0890 (US)

(72) Inventor: Kao, Russell, 217 Ada Ave. No. 47, Mt. View,
CA 94040 (US)
Inventor: Miller, Terrence C., 169 Oak Court, Menlo Park,
CA 94025 (US)
Inventor: Baum, Allen J., 2310 Cornell Street, Palo Alto,
CA 94306 (US)

(74) Representative: Patentanwälte Kohler - Schwindling -
Späth, Hohentwielstrasse 41, D-7000 Stuttgart 1 (DE)

(54) **Method and digital computer for recovering from errors.**

(57) A method and apparatus are dislosed for efficient, low
cost handling of system errors and interrupts which has no
impact on performance except after the error or interrupt
has occurred.

## METHOD AND DIGITAL COMPUTER FOR RECOVERING FROM ERRORS

A computer system performs useful work by executing a program consisting of a series of instructions which manipulate data in some useful way. Executing these instructions in digital hardware involves breaking each instruction cycle into two or more simple phases for the computer system's hardware to perform. Generally, the two minimum phases are a fetch phase and an execute phase. Each phase may be further divided into two or more states according to the manner in which the computer hardware is constructed.

In simple computer systems, the hardware completes execution of each phase of each instruction before moving to the next phase of that instruction or first phase of the next instruction. Many errors may occur during the execution of each instruction. These errors require that the computer system stop execution of the current instruction, take action based on these errors, and finish execution of the current instruction. Although some computer systems cannot continue executing the instruction which was interrupted by an error, it was recognized early on in the development of large computer systems that completing execution of the instruction during which an error occurred was a highly desirable feature.

In order to increase the performance of computer systems, a technique of executing more than one instruction at a time, called pipelining, was developed. Pipelining permits a computer to execute a first instruction while fetching the next instruction. Pipelining may be further expanded by dividing the instruction cycle into more phases and executing a different instruction in each phase of the instruction cycle.

Pipelining, however, complicates the problem of recovering from errors. One problem occurs when an error occurring in the final phases of execution of one instruction causes inputs used by later instructions to change. This can make error recovery difficult or impossible, can cause the system to run slower in order to accommodate correct error reporting, or can add significant cost in order to speed up error resolution. Other problems have occurred for the opposite reasons. Potential errors may be detected too soon in the pipeline, but subsequent instructions must still be allowed to begin execution before the error can actually be processed.

One common error occurs when the performance of the computer system is increased by tying the computer directly to a small amount of extremely high performance memory called a cache. This technique permits the computer system's central processor unit to operate at full speed rather than waiting for the next instruction to be fetched from the slower main memory. The central processor unit will occasionally attempt to access an instruction or data which has not yet been moved to the cache. This error, called a miss, requires the computer to immediately stop the execution of the current instruction which attempted the access, move the data to the cache and then restart execution of the instruction.

In the prior art several schemes have been used to try to resolve the problem of error recovery. First, some computer systems ignored the error recovery problem and could not recover from errors. Second, other computer systems resolved errors by backing out of the instruction which generated

2

the error. Backing out of the instruction requires completely restoring the state of the computer system to the state which existed before the execution of the instruction that caused the error. Typically, this means making copies of all registers, memory and status information that could be modified by any instruction causing an error and saving the information so it can be restored later if required. This includes reading the contents of all the registers and memory which could be written to during execution of an instruction. This may be implemented by either additional read ports on the register files or additional time. Third, other computer system resolved the error recovery problem by delaying modification of any registers until the possibility of an error occurring has passed. This technique is often referred to as interlocking and has three alternate implementations. A first alternative is to slow the machine down by interlocking on all instructions. A second alternative is to interlock only when an error might occur. A third alternative keeps a write queue and interlocks when a subsequent register access requires the contents of a register that is in the queue. A fourth prior art solution to the error recovery problem is to keep a write queue and gate in the contents when a subsequent register access requires the contents of a register that is in the queue. While this approach avoids interlocking, it can increase register access time, which is frequently a controlling factor in computer system performance.

What is needed is a method of error recovery which minimizes the amount of hardware required and maximizes system throughput while placing the burden of error recovery on operations performed after the error has

3

occurred.

In accordance with the preferred embodiment of the present invention, a method and apparatus are described for recovering from an error which occur during the execution of an instruction. The method and apparatus of the preferred embodiment permit the instruction to be restarted after the error has been corrected. The preferred embodiment of the present invention preserves the source operands of the instruction. However, the preferred embodiment of the present invention differs from the prior art in that it does not preserve the contents of the result operand. Since the source operand must be read anyway in order to perform the operation indicated by the instruction, no additional time is required by the preferred embodiment of the present invention to permit recovery from an error. When potential errors are detected early, the preferred embodiment of the present invention delays the error processing until the correct time for initiating recovery.

The present invention is superior to the prior art in several ways. First, the preferred embodiment of the present invention does not slow down the execution of the computer system. Prior art computer systems which require recovery of the contents of the result operand must perform a read of the register or memory prior to performing the operation indicated by the instruction. This register or memory access necessarily slows down the execution of the computer system. Interlocking during the period of time when potential errors may occur, a technique used in the prior art, slows down the execution of the computer system because the computer system cannot

4

take advantage of the pipelining to enhance performance while interlocking. Second, the preferred embodiment of the present invention requires less hardware to implement the recovery scheme than the prior art. The preferred embodiment of the present invention does not require a write queue or additional read ports on the register file and related control logic resulting in a lower cost implementation for any given technology. Finally, the preferred embodiment of the present invention is superior to prior art computer systems which failed to provide for recovery from errors.

The various features and advantages of the present invention may be more readily understood with reference to the following detailed description taken in conjunction with the accompanying drawings, and in which:

Figure 1 is a timing diagram of a computer system in accordance with the preferred embodiment of the present invention.

Figure 2 is a functional block diagram of an apparatus in accordance with the preferred embodiment of the present invention.

Figure 3 is a functional block diagram of a register file of the apparatus in Figure 2.

Figure 4 is a functional block diagram of an execution unit of the apparatus in Figure 2.

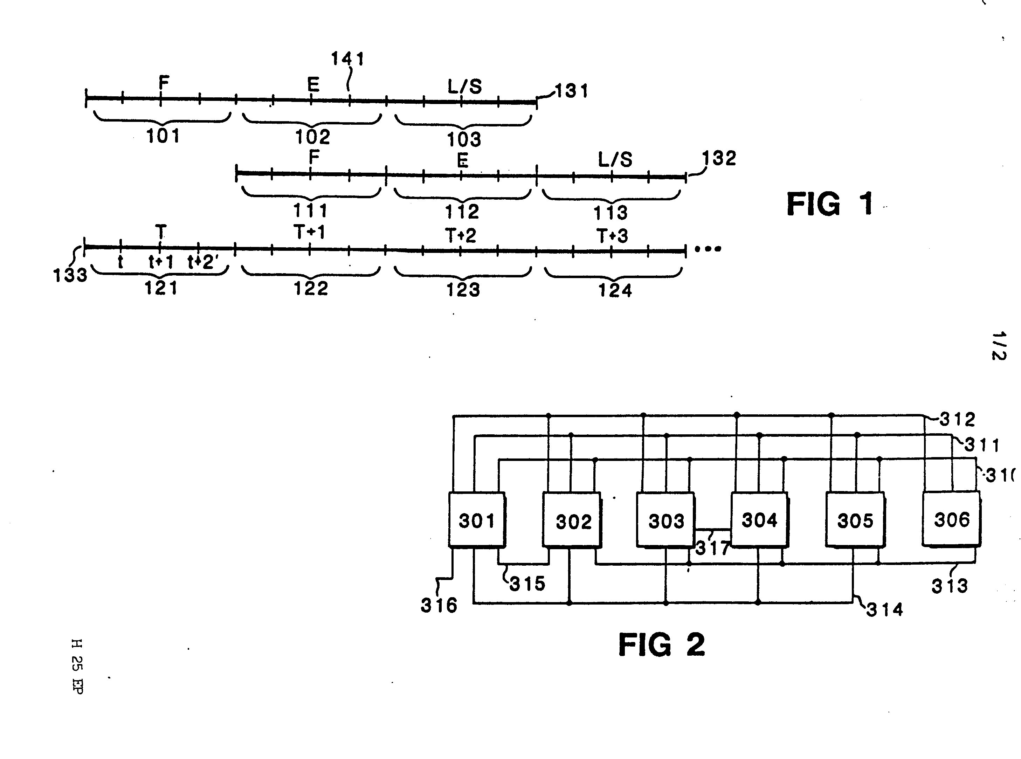

Figure 1 is a timing diagram of a computer system in accordance with the preferred embodiment of the present invention. Each instruction specifies an operation which is to be performed on source operands and whose results are to be stored in a result operand. A source operand specifies a location in memory or a register whose contents are to be used as inputs to the operation.  A result operand specifies a location in memory or a register where the result of the operation is to be stored.  The execution of instructions cycles 131 and 132 may be divided into three phases: the instruction fetch phase 101 and 111, instruction execution phase 102 and 112 and load/store phase 103 and 113.  In order to improve the performance of the computer system, the computer will execute more than one instruction at the same time.  This overlap is often referred to as pipelining.  Figure 1 illustrates the operation of a computer system with a two stage pipeline.  No more than one phase of an instruction may be executing at the same time and only one instruction may be executing in each phase of the instruction cycle at the same time.  In Figure 1, instruction cycle 131 represents the currently executing instruction.  Instruction cycle 132 represents the next instruction to be executed by the computer system.  Time line 133 shows time as execution in the computer system continues.  During time period 121, the current instruction if fetched from instruction cache.  During time period 122, the current instruction enters execution phase where the operation indicated by the current instruction is performed.  Also during this period the next instruction is fetched from cache.  However, during time period 122 an event 141 occurs with requires the computer to stop execution immediately on the current instruction and any other instruction in the instruction pipeline.

The preferred embodiment of the present invention then must restore the state of the computer system to the extent necessary to permit execution to continue properly after the error has been corrected.  The preferred embodiment of the present invention restores the contents of the source

6

operands. The preferred embodiment of the present invention does not restore the contents of the result operands. Since the source operands must be read anyway in order to perform the operation indicated by the instruction, no additional time is required to permit recovery from errors. In the preferred embodiment of the present invention, the carry and half carry bits of the computer system may be restored because they are source operands for many instructions. However, none of the additional status bits need ever be restored because they are not source operands since they are not inputs for any instructions. After the contents of the source operands have been restored and the error resolved, the preferred embodiment begins execution of the current instruction again with the fetch phase.

In order to be able to restore the contents of the source operands, the computer must keep a copy of the source operands as they are read from registers or from memory and then return the copy to the register or memory after the error occurs. Restoring only the source operands and not the result operands means that if the result operands are examined after the error has been detected and recovered from, but, before the current instruction is restarted their contents are unknown. The current instruction may have already stored the results of the operation in the result operand, or the result operand may contain the results of a previous instruction.

In a computer system which has a deeper pipeline than the pipeline of the preferred embodiment, the computer needs to save the contents of the registers and memory read in each phase between when the register or memory access occurs and when the last critical error could be detected. Then when

7

an error occurs, the computer must restore the registers for not only the current instruction, but for any following instruction which has read any of its source operands.

Figure 2 is a functional block diagram of an apparatus in accordance with the preferred embodiment of the present invention. The apparatus contains six functional elements: an instruction memory 301, an optional virtual address translation unit 302, an instruction unit 303, an execution unit 304, an optional floating point unit 305 and a register file 306. These functional elements are connected together through five busses: a result bus 310, a first operand bus 311, a next instruction bus 312, a second operand bus 313 and the address bus 314. Only the execution unit and the register file are involved in performing the operation of the present invention. The execution unit generates and contains the conditions and carry and half carry codes. The carry and half carry codes may serve as inputs for the later instructions. The register file 306 contains the data registers used as inputs to instructions. The data registers in register file 306 may also receive the results of the operations indicated by the instructions.

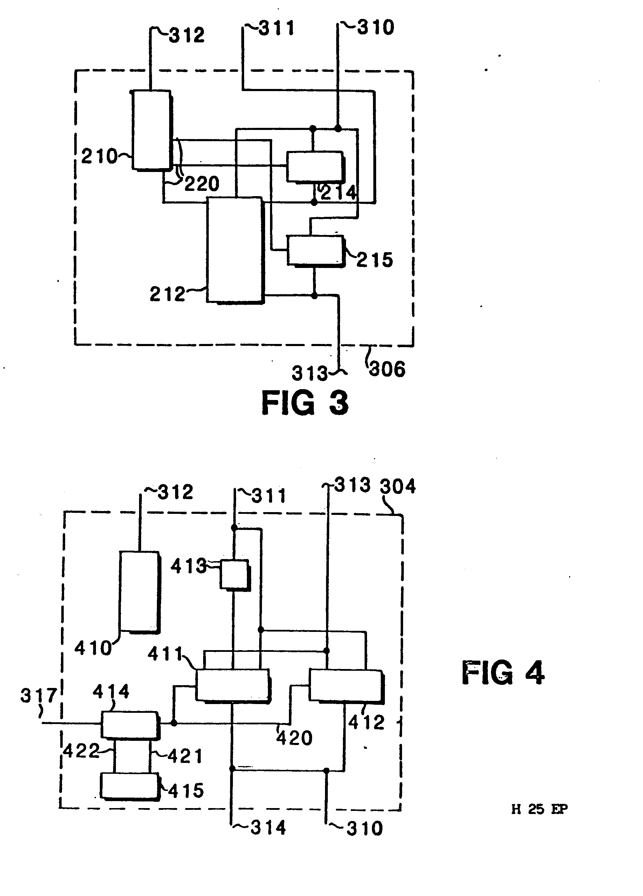

Figure 3 is a functional block diagram of a register file 306 of the apparatus shown in Figure 2. In the preferred embodiment of the present invention, the register file contains a register bank 212, instruction decode unit 210, and two save registers 214 and 215. Control is communicated over bus 220. The register bank 212 has two read ports, one for the first operand bus 311 and one for the second operand bus 313, and one write port for the result bus 310. During the fetch cycle, the next

8

instruction appears on the next instruction bus 312. The register file 306 decodes the instruction and applies the contents of the specified register onto the first and second operand busses. In accordance with the preferred embodiment of the present invention, the contents of the register indicated by the instruction which appear on the first and second operand busses 311 and 313 are saved respectively in the save registers 214 and 215 as they are read for normal execution. The save registers must be as deep as the distance between the phase of the instruction cycle when register access occurs and the phase of the instruction cycle where the last critical error could be detected. The distance for the preferred embodiment is one phase, therefore the save register needs to be only one register deep. If no error occurs, the contents of the save register simply fall out of the register when the source operands of the next instruction are saved. The restore operation is performed by alternately transferring the data from the save registers 214 and 215 through the result bus 310 back into the register file. For deeper pipelines, this operation would be repeated for each register in each save register.

Figure 4 is a functional block diagram of an execution unit of the apparatus in Figure 2. In the preferred embodiment of the present invention, the execution unit contains instruction decode unit 410, shifter 413, arithmetic logic unit 411, mask and merge unit 412, condition generator and register 414 and save register 415. During the instruction fetch phase, the current instruction is placed on the next instruction bus. In response to the instruction and during the execution phase, the instruction decode logic directs through control lines (not shown) the arithmetic logic unit or

9

the mask and merge unit to operate on the contents of the first and/or second operand busses 311 and 313 and to place the results of the operation onto the result bus 310. Status information from the operation is generated and stored in the condition registers 414. A portion of the status information may be used as inputs to instructions, the state of the condition codes of the status information which may serve as inputs to instructions is saved before the new status information is generated. In the preferred embodiment, the carry and half carry codes are moved into the save register 415 over a bus 412. As discussed above, the save registers must be as deep as the distance between the phase of the instruction cycle when register access occurs and the phase of the instruction cycle where the last critical error could be detected. The distance for the preferred embodiment is one, therefore the save register needs to be only one register deep. In the event that no error occurs, the retained values fall out of the save register when the next copy is stored. The restore operation is performed by transferring the saved status information from the save register 415 over the bus 422 back into the condition generator and register 414. For deeper pipelines, this operation would be repeated for each register in the save register.

CLAIMS:

1. A method for executing instruction having source operands and result operands in a pipelined digital computer having memory and a central processing unit during which errors may occur, the method capable of recovering from errors which occur during the execution of the instruction, the method comprising:

fetching the instruction from memory;

fetching the source operands of the instruction;

saving a copy of the source operands;

executing the instruction; and

saving the result operand of the instruction.

2. A method as in claim 1, wherein the source operands saved are the registers and memory accessed and the carry and half carry codes.

3. A method for recovering from errors which may be resolved in a pipelined digital computer having memory and a central processing unit during the execution of an instruction having source operands and result operands, the method comprising:

restoring the source operands to their initial condition before the execution of the instruction started with the source operand saved during the normal execution of the instruction;

resolving the error; and

executing the instruction.

4. A method as in claim 3, wherein the error is the miss of a cache which is resolved by loading the missing data from memory.

5. Digital computer having memory and a central processing unit for performing the method according to claim 1 or 2, comprising:

means for fetching the instruction from memory;

means for fetching the source operands of the instruction;

means for saving a copy of the source operands;

means for executing the instruction; and

means for saving the result operand of the instruction.

6. Digital computer having memory and a central processing unit for performing the method according to claim 3 or 4, comprising:

means for restoring the source operands to their initial condition before the execution of the instruction started with the source operand saved during the normal execution of the instruction;

means for resolving the error; and

means for executing the instruction.

F E L/S ~131

101 102 103

F E L/S 132

111 112 113

141

T T+1 T+2 T+3 ...

133 t t+1 t+2'

121 122 123 124

**FIG 1**

**FIG 2**

301 302 303 304 305 306

312
311
310

316 315 317 313
314

H 25 EP

0212132

0212132

**FIG 3**

**FIG 4**

H 25 EP

0212132

European Patent
Office

**EUROPEAN SEARCH REPORT**

Application number

EP 86 10 8503

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 533 082 (SCHNABEL et al.) <br> * Column 3, lines 7-75; column 13, line 6 - column 14, line 45 * | 1-3,5,6 | G 06 F 11/14 |
| | --- | | |
| A | DE-A-3 211 256 (SIEMENS) <br><br> * Page 1, lines 3-28; page 4, lines 14-18 * | 1-3,5,6 | |
| | --- | | |
| A | IBM TECHNICAL DISCLOSURE BULLETIN, vol. 22, no. 5, October 1979, pages 1813,1814, New York, US; S.P. DALE et al.: "Check pointing by saving source data" <br> * Whole document * | 1-3,5,6 | |
| | --- | | TECHNICAL FIELDS SEARCHED (Int. Cl.4) |
| A | IBM TECHNICAL DISCLOSURE BULLETIN, vol. 17, no. 8, January 1975, pages 2239-2242, New York, US; G.L. HICKS et al.: "Intruction retry mechanism for a computer" <br> * Page 2241, lines 21-34 * | 1-3,5,6 | G 06 F 11/14 |
| | ----- | | |

The present search report has been drawn up for all claims

| Place of search | Date of completion of the search | Examiner |
|---|---|---|
| THE HAGUE | 25-09-1986 | QUESSON C.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82